# EUROPEAN PATENT SPECIFICATION

(11) **EP 4 428 489 B1**
(45) Date of publication and mention of the grant of the patent: **08.07.2026**
(21) Application number: 23160384.6
(22) Date of filing: 07.03.2023
(51) Int. Cl.: G01B 21/04, G01B 5/008, G01B 7/008, G01B 11/00

(54) **A WIRELESS MEASUREMENT PROBE**
DRAHTLOSE MESSSONDE
SONDE DE MESURE SANS FIL

(43) Date of publication of application: 11.09.2024
(73) Proprietor: Renishaw PLC, Wotton-under-Edge, Gloucestershire GL12 8JR (GB)
(72) Inventor: Holmes, Mark James Andrew, Gloucestershire, GL12 8JR (GB); Buckingham, Jamie John, Gloucestershire, GL12 8JR (GB); Dalmau, Christopher Stephen, Gloucestershire, GL12 8JR (GB); Harbour, Jonathan James, Gloucestershire, GL12 8JR (GB)
(74) Representative: Dunn, Paul Edward

(56) References cited:
- WO-A1-01/67033
- US-A- 4 670 989
- US-A1- 2004 183 789
- US-A1- 2018 011 175

## Description

The present invention relates to a wireless measurement probe, and in particular to a small diameter wireless measurement probe for measuring the dimensions of workpieces on a machine tool.

Measurement probes for the in-process inspection of workpieces on a machine tool are known. To operate reliably in the harsh environment of a machine tool such measurement probes are typically sealed and pass collected measurement data to a probe interface located within the machine tool enclosure over a wireless (e.g., optical or radio) link. It is known to pass the wireless signals through a suitably transparent window of the probe to enable wireless communications and protect the internal components of the measurement probe from the contaminants (coolant, cutting debris etc) that are present in the machine tool environment. US2004/0183789 and US4670989 describe examples of measurement probes.

WO01/67033 describes a measurement probe that has a cylindrical probe body with a transparent, annular window. A circuit board comprising the signal transmitters and/or receivers (e.g., multiple optical transmitters and receivers) is located inside the probe body, adjacent the annular window. The wireless signal can thus pass through the window to allow a wireless communications link to be established between the measurement probe and its associated interface.

The present inventors have found that the arrangement of WO01/67033 provides a robust and reliable measurement probe. However, the structural arrangement described in WO01/67033 can sometime hinder the transmission or reception of wireless signals, especially when implementing a radio link in a relatively small measurement probe. In particular, it has been found that even the small variations in the axial position of the circuit board relative to the annular window that inevitably occur with the arrangement of WO2001/67033 can significantly reduce the transmitted or received signal strength. This results in a reduced operational range between the measurement probe and the associated interface or requires the measurement probe to increase the power of its transmitted signal thereby reducing battery life.

According to a first aspect of the present invention, there is provided a wireless measurement probe for a machine tool, comprising;
a carrier element comprising an emitter or receiver of radiation, and
a probe body that encloses the carrier element and includes a window that is substantially transparent to the emitted or received radiation, wherein the probe body is cylindrical and the window comprises an annular window
characterised in that the carrier element is engaged with or affixed to the window such that the emitter or receiver of radiation is maintained in a substantially invariant location relative to the window.

A wireless measurement probe (which may also be termed a measurement probe, or probe, for short) comprises a probe body or housing. A carrier element, such as a rigid or flexible printed circuit board, is located inside the probe body. The carrier element comprises an emitter or receiver of radiation. In a preferred embodiment, the emitter or receiver of radiation may comprise components that are formed on, or attached to, a flexible printed circuit board. It should be noted that the emitter or receiver of radiation may comprise an emitter of radiation, a receiver of radiation or both an emitter and a receiver of radiation (i.e., it is an emitter and/or receiver of radiation). As explained below, the emitter or receiver of radiation may comprise an optical radiation source (e.g., a LED or laser diode) or an antenna for emitting/receiving radio frequency (RF) radiation.

The probe body comprises a substantially transparent window through which the emitted or received radiation can pass without any substantial attenuation. For example, the window may comprise an optically transparent material if light is emitted or received. Similarly, the window may comprise a radio transparent material (i.e., material having a low dielectric loss factor) if RF radiation is being emitted or received. The rest of the probe body may comprise a rigid and robust material, such as metal, that is opaque to the emitted or received radiation. In this manner, the emitted and/or received radiation passes through the window.

The measurement probe is characterised by the carrier element being engaged with or affixed to the window, namely the inside of the window. In particular, the carrier element is engaged with or affixed to the window so that the emitter or receiver of radiation is maintained in a substantially invariant location relative to the window. A variety of techniques may be used to fasten or secure the carrier element to the window. For example, an adhesive may secure the carrier element directly to the window. One or more fastening elements may also be used to fasten the carrier element to the window. For example, the fastening elements may comprise screws, bolts, rivets, clips, press or snap fit members. The inside of the window may be profiled, for example to include one or more steps or features, to enable the carrier element to be pushed into engagement with, and hence secured against, the window. The carrier element (and hence the emitter or receiver) can thus be fixed in a well-defined or predetermined position relative to the window. In other words, the relative axial position (i.e., the position along the elongate axis of the probe) of the carrier member and the window may be predetermined and fixed.

The measurement probe of the present invention has a number of advantages over prior art probes of the type described in WO01/67033 where the axial (longitudinal) position of the emitters/receivers can vary relative to the window in use and between different probes. In particular, the measurement probe of the present invention ensures that there is consistent performance of the transmission/reception between different manufactured probe products, that the radiation pattern is as uniform as possible around the probe axis and that the location of emitters/receivers is less affected by accelerations, shocks, or vibrations. It should be noted that the present invention may be implemented for a probe of any size, but the benefits are especially pronounced for smaller radio measurement probes where even small changes in the position of the antenna relative to the window can result in substantial changes in communications performance.

Advantageously, the window is profiled or shaped in a way that allows the carrier element to be placed in a defined location. The inside of the window (i.e., the window surface on the inside of the probe body) may be configured to allow attachment of the carrier element. For example, recesses (slots, holes or grooves etc) or protrusions (pillars, steps, ridges etc) may be formed in the window that allow attachment of the carrier element to the window. The carrier element may attach directly to the window (e.g., parts of the carrier element may be pressed-fitted or 'slid into grooves or slots in the window). Fasteners (e.g., clips, screws etc) may also be used to attach the carrier element to the window or to push the carrier element into engagement with the window. The outside of the window may comprise a surface (e.g., a cylindrical surface) that is substantially flush with the adjacent surfaces of the probe body.

In a preferred embodiment, the window comprises at least one protrusion or recess. The at least one protrusion or recess may engage and align the carrier element. In other words, a protrusion or recess of the window may provide a datum or reference surface (i.e., a surface having a known position relative to the rest of the window) that a certain portion (e.g., a surface or an edge) of the carrier element can engage. The carrier element, when pressed into engagement with such a protrusion or recess, may then adopt a known (predetermined) position relative to the window. The measurement probe may also comprise at least one bias (e.g., a biased member) for pushing the carrier element into engagement with the at least one protrusion or recess. In other words, a biassing (e.g., springloaded) component may be provided within the probe body to urge the carrier element into engagement with the at least one protrusion or recess. In this manner, the carrier element is fixed in place relative to the window (i.e., it remains engaged with the at least one protrusion or recess).

The measurement probe may have a circular cross-section. In particular, the measurement probe may be cylindrical (noting the radius of the cylinder may vary along its length). As described above, the probe body is cylindrical and the window comprises an annular window that extends completely around the circumference of the probe body. An annular window is advantageous for mechanical strength and because it can be sealed against the rest of the probe body, for example during assembly of the measurement probe.

In a preferred embodiment, the inside of the annular window comprises an inwardly protruding step around its circumference. This inwardly protruding step allows the carrier element to be held in predetermined location relative to the annular window. As mentioned above, the probe body may include a biasing means (e.g., a spring bias etc) to push the carrier element into engagement with the step. For example, an edge of the carrier element may be (axially) biased along the longitudinal axis of the probe to engage the inwardly protruding step. The carrier element may also be biased outwards (i.e., radially) so that a flat surface of the carrier element is pushed against the inside surface of the window. Such an arrangement is particularly suited to carrier element in the form of flexible circuit boards on which an RF antenna is formed.

The emitter or receiver of radiation may emit or receive radiation of any wavelength. The wireless measurement probe may include a radio-frequency (RF) transmission system or an optical transmission system. The RF or optical transmission system may be configured to communicate with an RF or optical receiver system provided at a remotely located probe interface. An optical transmission system may be provided that issues visible signals (e.g., coloured and/or flashing lights) that can be seen by a user. The wireless communication may be one-way (e.g., transmit-only) or bi-directional (i.e., transmit and receive). Conveniently, one or more optical transmitters (e.g., LEDs, laser diodes etc) and/or one or more optical detectors (photodiodes etc) may be provided. In other words, the emitter or receiver of radiation may comprise an optical transmitter or detector. In a preferred embodiment, the emitter or receiver of radiation comprises an RF antenna. The carrier member may also include the radio electronics that are connected to the antenna. For example, the carrier member (e.g., circuit board) may include transmitter electronics that drive the antenna or receiver electronics to receive electrical signals from the antenna. These transmitter/receiver electronics may alternatively be provided on a separate circuit board.

The carrier element may comprise a printed circuit board (PCB), which is also termed a circuit board herein for short. Advantageously, the carrier element comprises a flexible printed circuit board. The flexible circuit board may be fully flexible or may include rigid portions that are connected by flexible portions. The flexible circuit board may adopt a folded configuration (i.e., when it is located inside the probe body). For example, the flexible circuit board may be folded into a particular configuration that fits inside the probe body during assembly of the measurement probe. The circuit board may comprise components other than the emitter and receivers. For example, the circuit board may include communications electronics and electronics for receiving and/or processing measurement data from the measurement sensors within the probe.

Advantageously, the window comprises a moulded plastic window. As mentioned above, the plastic material is selected to be substantially transparent to the wavelength of radiation that is to be emitted/received by the probe. The window may comprise a plastic. For example, the window may comprise polycarbonate, acrylic, Acrylonitrile Butadiene Styrene (ABS) or nylon etc. The plastic window may be moulded. The plastic window may be machined. The window may comprise a ceramic. For example, Alumina, Zirconia etc. The window may comprise a glass. For example, borosilicate or (synthetic) sapphire glass. Various other materials, such as fibreglass laminate would also be suitable. In a preferred embodiment described below, the window comprises polycarbonate. Polycarbonate is preferred because it mechanically tough and both RF transparent and optically transparent.

As mentioned above, a measurement probe for a machine tool is typically sealed to protect it from the ingress of coolant and cutting debris that is present in the machine tool environment. A wireless measurement probe, by definition, communicates wirelessly but it may be powered over a conductive link (e.g., via a wire or connector etc that provides electrical power). Advantageously, one or more batteries are used to power the measurement sensors and the wireless communications electronics etc. This removes the need for any wired or electrically conductive links to the probe whatsoever.

The wireless measurement probe thus preferably comprises at least one battery within the probe body for powering the wireless measurement probe. It is known that certain batteries, such as Lithium batteries, can release small amounts of gas (typically hydrogen and oxygen) under certain environmental conditions (such as higher than ideal working temperatures and high humidity). For safety reasons, it is undesirable to allow such potentially explosive gas to accumulate within the probe body (even through the amount of gas involved is relatively small). The standard BS EN IEC 60086-4:2019 Primary Batteries - Part 4: Safety of Lithium Batteries also recommends that battery compartments should be designed to allow any such gases to escape. It is thus preferred that the window is sufficiently gas permeable to allow any gas emitted by the at least one battery to be vented (i.e., to the atmosphere) from inside the probe body via the window. In other words, the window is preferably configured to allow the dissipation of any gas emitted by the battery. For example, the window may be sufficiently gas permeable to allow more than 0.2ml/day of emitted gas to be vented. More preferably, it may allow more than 0.5ml/day of gas to be vented, or even more preferably more than 1ml/day. The window surface area, thickness and material permeability may thus be appropriately selected to allow the required rate of gas venting. It is also preferred that the window is substantially liquid impermeable (i.e., to prevent the ingress of moisture or coolant). As explained below, it has been found that a polycarbonate window has sufficient gas permeability for this purpose.

As mentioned above, the present invention is particularly advantageous for small measurement probes where alignment tolerances are tighter. Advantageously, the probe body is cylindrical and has an outer diameter of 30mm or less. More preferably, the probe body may have an outer diameter of 25mm or less. In a preferred embodiment, the probe body may have a maximum outer diameter of 24mm.

The measurement probe may also include a measurement sensor. The measurement sensor may be a dimensional metrology sensor (i.e., a sensor used for measuring the position of points on the surface of an object). The measurement sensor may be a non-contact sensor. The measurement sensor may be a contact sensor. Preferably, the measurement probe includes a stylus having a workpiece-contacting tip and one or more sensors within the probe body for sensing deflection of the stylus. The measurement probe may comprise at least one of a touch trigger sensor or an analogue deflection sensor. The measurement probe may be a touch trigger probe. A touch trigger sensor within the probe may sense when the stylus has been deflected (e.g., due to contact of the stylus with an object) and a trigger signal may then be issued to the machine tool via the wireless communications link. The measurement probe may be an analogue probe (also known as a scanning probe). One or more sensors within the probe may measure the magnitude and/or direction of stylus deflection. A continual stream of analogue (scanning) measurements may be produced that can be output via the wireless communications link. The measurement probe may instead comprise other types of sensor (e.g., ultrasound or temperature sensors etc).

The invention will now be described, by way of example only, with reference to the accompanying drawings in which:
Figure 1 illustrates a wireless measurement probe carried by a machine tool,
Figure 2 is a perspective view of a wireless measurement probe of the present invention,
Figure 3 shows the annular window of the measurement probe of figure 2,
Figure 4 is a view of the flexi-carrier element when affixed to the annular window of figure 3, and
Figure 5 is a sectional view through of the upper part of the measurement probe of figure 2 showing the two button batteries that power the probe.

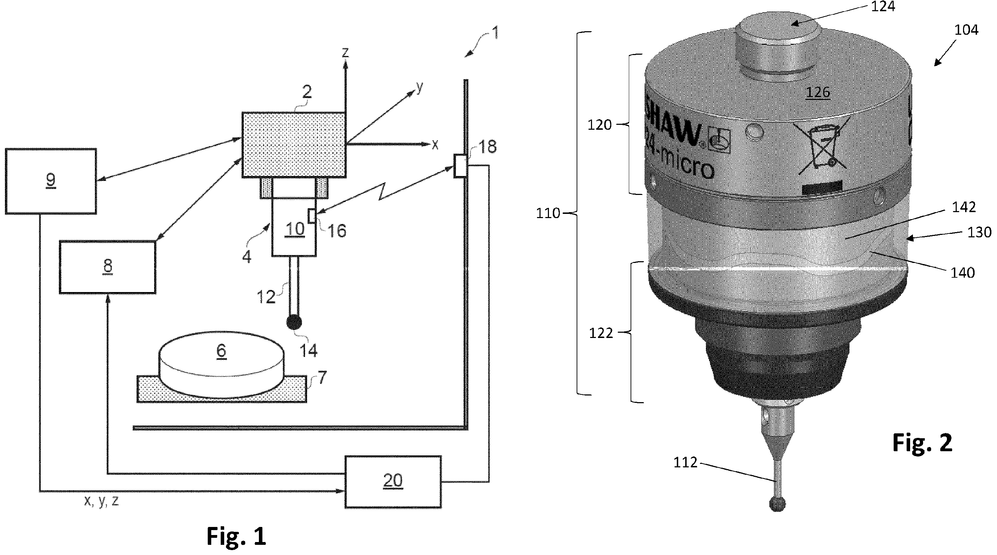

Referring to figure 1, a machine tool 1 is schematically illustrated having a spindle 2 holding a touch trigger measurement probe 4.

The machine tool 1 includes various motors 8 for moving the spindle 2 relative to a workpiece 6 located on a workpiece holder 7 within the work area of the machine tool. The location of the spindle within the work area of the machine tool 1 is accurately measured in a known manner using encoders 9; such encoder measurements provide "machine position data" in the machine coordinate system (x,y,z). A numerical controller (NC) or machine tool controller 20 of the machine tool controls (x,y,z) movement of the spindle 2 within the working volume of the machine tool and also receives information (machine position data) from the various encoders describing the spindle position. It should also be remembered that the machine tool apparatus of figure 1 is merely provided as an example and different or further axes of machine tool motion (e.g., tilting or rotary axes) could be provided.

The touch trigger measurement probe 4 comprises a probe body 10 that is attached to the spindle 2 of the machine tool using a standard releasable shank connector. The probe 4 also comprises a workpiece contacting stylus 12 that protrudes from the housing. A stylus ball 14 is provided at the distal end of the stylus 12 for contacting the associated workpiece 6. The touch trigger probe 4 generates a so-called trigger signal when deflection of the stylus exceeds a predetermined threshold. The probe 4 comprises a wireless transmitter/receiver portion 16 for passing the trigger signal to a wireless receiver/transmitter portion of a probe interface 18. The wireless link may be, for example, RF or optical. In this example, a spread spectrum radio link is provided. The machine tool controller 20 receives the machine position data (x,y,z) from the encoders 9 and, as will be described in more detail below, also has a SKIP input line for receiving a trigger signal (also termed a SKIP signal) from the probe interface 18. This SKIP input allows the machine position data (x,y,z) describing the position of the spindle in the machine coordinate system to be recorded at the instant the probe interface issues a trigger signal to the SKIP input. After appropriate calibration, this allows the position of individual points on the surface of objects, such as the workpiece 6, to be measured.

A generic machine tool is illustrated in figure 1, but there are various types of machines tools used for different manufacturing applications and these can vary significantly in size. For example, machine tools exist that are designed to cut workpieces that range in size from miniature components (e.g., for watch mechanisms or the like) to large components for heavy industry (e.g., mining or aeronautical equipment). Measurement probes for such machines are also provided in a range of different sizes. For example, 60mm diameter and more recently 40mm measurement probes are available. However, difficulties arise when trying to install such measurement probes on smaller machine tools because there might simply be insufficient space within the machine tool for such a measurement probe. The miniaturisation of known machine tool measurement probe is also not a trivial task. The need for batteries, appropriately robust contact sensors and wireless communications electronics makes reducing the size of a probe a complex task.

The present inventors have also appreciated that for smaller measurement probes difficulties can arise when attempting to emit or receive signals through a transparent window in a non-transparent (e.g., metallic) probe housing. In the case of radio-frequency (RF) communications links, even relatively small changes in the position of the radio antenna relative to the transparent window can have a significant effect. In particular, the positioning of a radio antenna relative to the cavity within the probe body and the various material contained within that probe body within can have significant effect on the radiated performance. This is due to issues such as the dielectric loading of particular materials and resonances within the enclosure. As will now be explained below, affixing the antenna to the transparent annular window allows the relative positions of the antenna, the window and the rest of the probe body to be accurately controlled thereby optimising signal transmission and reception, even for small diameter probes.

Referring to figure 2, an external view of a touch trigger, wireless measurement probe 104 of the present invention is illustrated.

The measurement probe 104 comprises a probe body 110 from which a stylus 112 extends. In this example, the probe body 110 comprises a first (upper) cylindrical portion 120 and a second (lower) portion 122 that tapers to a reduced diameter. A protrusion 124 from a flat upper face 126 of the first (upper) cylindrical portion 120 enables secure attachment of the proximal end of the measurement probe 104 to a machine tool shank, which can in turn be held by the spindle of a machine tool. A touch trigger sensor is provided within the probe body 110 that generates a so-called trigger signal when the stylus 112 is deflected relative to the probe body 110. The trigger signal is communicated over a RF link to a remote probe interface (not shown in figure 2). The illustrated measurement probe 104 has a maximum outer diameter of 24mm.

The probe body 110 is made mostly from metal but comprises an annular window 130 that is made from moulded polycarbonate. A rigid central structure (not shown) within the probe body gives the measurement probe the majority of its structural strength. The annular window 130 is firmly held between the first and second portions 120 and 122.

Flexible seals (not shown) are also provided between the annular window 130 and the surrounding probe body to prevent the ingress of liquids or debris from the machine tool environment.

The annular window 130 provides a transparent or non-conductive aperture for the purpose of allowing wireless signals to pass through. In this example, a RF antenna 140 mounted on a circuit board 142 is shown located behind the annular window 130. Radio signals emitted from the antenna 140 can pass though the moulded polycarbonate annular window 130 with minimal attenuation. Furthermore, the antenna 140 is positioned relative to the annular window 130 and the various component within the cavity defined by the probe body 110 to optimise the strength of the radio signal transmitted by the measurement probe 104. It should be noted that although a radio antenna is shown, it would also be possible to use alternative radiation sources (e.g., optical light sources) with a suitable transmissive window material (e.g., an optically transparent window).

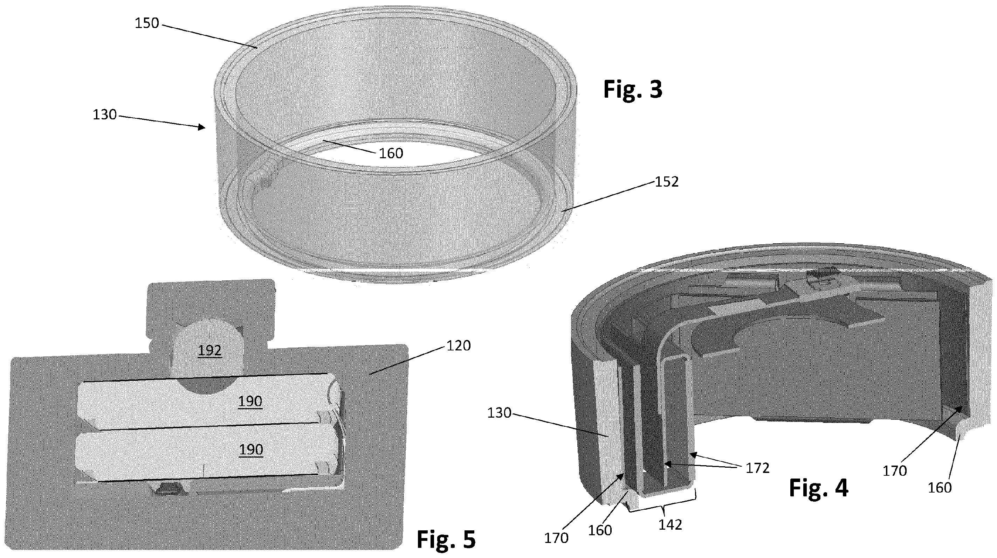

Referring next to figures 3 and 4 the structure of the annular window 130 and the flexible circuit board 142 affixed to the window will be described.

Figure 3 shows the annular window 130 alone. The upper and lower surfaces 150 and 152 of the window are profiled to engage and seal against complementary features provided on the first and second portions 120 and 122 of the probe body 110 (the probe body not being shown in figure 3). The annular window 130 also includes a radial step or inwardly projecting lip 160, shown at the lower end of the window 130 in the orientation shown in figure 3. This lip or radial step 160 is a feature that positively locates the flexible circuit board that carries a radio antenna axially, relative to the exterior face of the window 130. It should be noted that figure 3 is merely one example of a suitable feature for aligning and securing a circuit board to a window and the skilled person would appreciate that other designs could be implemented to ensure an antenna is consistently located in relation to the internal diameter of the window.

Figure 4 shows a cut-through image of the annular window 130 with the flexible circuit board 142 mounted to the inside of it. The flexible circuit board 142 has an outermost region 170 that sits on the inwardly projecting lip 160 of the annular window. The outwardly facing surface of this outermost region 170 (which is not visible in figure 4) provides the RF antenna 140 that is shown in figure 2. The flexible circuit board 142 is folded to form a folded inner region 172, that is contained within the volume enclosed by the outermost region 170 and which can include further electrical components (such as processing electronics and RF components connected to the RF antenna 140). A central structural pillar or post (not shown) is surrounded by the flexible circuit board 142.

The folded, flexible circuit board 142 and probe body 110 are arranged so that the outermost region 170 of the circuit board is pushed into engagement with and thereby fastened against the inwardly projecting lip 160 and the inner surface of the annular window 130. This ensures that that RF antenna 140 is located in a predetermined location relative to the annular window 130 that optimises the emission of radio signals from the RF antenna 140. This ensures that there is consistent performance of the transmission between product, the radiation pattern is as uniform as possible around the probe axis (dependent on the antenna design) and the location of the antenna is less affected by accelerations, shocks, or vibrations. This is especially the case for smaller measurement probes.

Referring to figure 5, there is shown a cut-through image of the part of the cylindrical portion 120 that houses two CR1632 lithium batteries 190 for powering the measurement probe. A flexible rubber ball 192 pushes the stack of two batteries into a lower (conductive) surface. The rubber ball 192 electrically insulates the upper battery to the cylindrical portion 120 of the housing and provides a robust fixing method that is resilient to shock and vibration. Electrical cables run from the upper and lower (negative and positive) battery poles to the flexible circuit board 142, thereby powering the circuitry.

It is known that gas, predominantly Hydrogen and Oxygen, may be expelled from the batteries contained within the probe. Although only small amounts of gas are likely to be generated, it is preferred to vent such gas from the measurement probe (i.e., to prevent a build-up of such gas within the measurement probe). The polycarbonate annular window 130 is 2mm thick, which has been found to be sufficient to vent these gasses due to the permeability of polycarbonate. In particular, for the expected volumes of gas it has been calculated that 2mm thick polycarbonate with a surface area of 0.07cm2 would be sufficient to vent the gases. The annular window 130 can thus also act as a gas vent, removing the need for a separate vent.

It should again be remembered that the above are merely examples of the present invention. The skilled person would appreciate the alternatives and variants that would be possible. For example, measurement probes of different shapes or construction could be provided. Similarly, the flexible circuit board could be engaged with or affixed to the window in a variety of alternative ways (e.g., using adhesive, clips, screws etc). It should also be noted that, unless explicitly stated otherwise, any use of the term "or" herein is intended to be a non-exclusive "or" in accordance with the normal linguistic meaning of such a term.

## Claims

1. A wireless measurement probe (104) for a machine tool, comprising;
a carrier element (142) comprising an emitter or receiver of radiation (140), and
a probe body (110) that encloses the carrier element (142) and includes a window (130) that is substantially transparent to the emitted or received radiation, wherein the probe body (110) is cylindrical and the window (130) comprises an annular window,
wherein the carrier element (142) is engaged with or affixed to the window (130) such that the emitter or receiver of radiation (140) is maintained in a substantially invariant location relative to the window (130).

2. A wireless measurement probe (104) according to any preceding claim, wherein the window (130) comprises at least one protrusion or recess for engaging and aligning the carrier element (142).

3. A wireless measurement probe (104) according to claim 2, comprising at least one bias for pushing the carrier element (142) into engagement with the at least one protrusion or recess.

4. A wireless measurement probe (104) according to claim 1, wherein the inside of the annular window (130) comprises an inwardly protruding step (160) around its circumference that allows the carrier element (142) to be held in a predetermined location relative to the annular window (130).

5. A wireless measurement probe (104) according to any preceding claim, wherein the emitter or receiver of radiation (140) comprises an RF antenna.

6. A wireless measurement probe (104) according to any preceding claim, wherein the emitter or receiver of radiation (140) comprises an optical transmitter or detector.

7. A wireless measurement probe (104) according to any preceding claim, wherein the carrier element (142) comprises a flexible printed circuit board.

8. A wireless measurement probe (104) according to any preceding claim, wherein the window (130) comprises a moulded plastic window.

9. A wireless measurement probe (104) according to any preceding claim, wherein the window (130) comprises polycarbonate.

10. A wireless measurement probe (104) according to any preceding claim, comprising at least one battery (190) within the probe body (110) for powering the wireless measurement probe, wherein the window (130) is sufficiently gas permeable to allow any gas emitted by the at least one battery (190) to be vented from inside the probe body (110) via the window.

11. A wireless measurement probe (104) according to any preceding claim, wherein the cylindrical probe body (110) has an outer diameter of 30mm or less.

12. A wireless measurement probe (104) according to any preceding claim, further comprising a touch trigger sensor.

13. A wireless measurement probe (104) according to any one of claim 1 to 11, further comprising an analogue deflection sensor.

## Patentansprüche

1. Drahtlose Messsonde (104) für eine Werkzeugmaschine, umfassend:
ein Trägerelement (142), das einen Sender oder Empfänger von Strahlung (140) umfasst, und
einen Sondenkörper (110), der das Trägerelement (142) umschließt und ein Fenster (130) umfasst, das für die gesendete oder empfangene Strahlung im Wesentlichen transparent ist,
wobei der Sondenkörper (110) zylindrisch ist und das Fenster (130) ein ringförmiges Fenster umfasst,
wobei das Trägerelement (142) mit dem Fenster (130) in Eingriff steht oder daran befestigt ist, so dass der Sender oder Empfänger von Strahlung (140) in einer im Wesentlichen invarianten Position relativ zu dem Fenster (130) gehalten wird.

2. Drahtlose Messsonde (104) nach einem der vorhergehenden Ansprüche, wobei das Fenster (130) mindestens einen Vorsprung oder mindestens eine Aussparung zum Eingreifen und Ausrichten des Trägerelements (142) umfasst.

3. Drahtlose Messsonde (104) nach Anspruch 2, umfassend mindestens eine Vorspannung zum Drücken des Trägerelements (142) in Eingriff mit dem mindestens einen Vorsprung oder der mindestens einen Aussparung.

4. Drahtlose Messsonde (104) nach Anspruch 1, wobei die Innenseite des ringförmigen Fensters (130) eine nach innen vorstehende Stufe (160) um seinen Umfang umfasst, die es dem Trägerelement (142) ermöglicht, in einer vorbestimmten Position relativ zu dem ringförmigen Fenster (130) gehalten zu werden.

5. Drahtlose Messsonde (104) nach einem der vorhergehenden Ansprüche, wobei der Sender oder Empfänger von Strahlung (140) eine HF-Antenne umfasst.

6. Drahtlose Messsonde (104) nach einem der vorhergehenden Ansprüche, wobei der Sender oder Empfänger von Strahlung (140) einen optischen Sender oder Detektor umfasst.

7. Drahtlose Messsonde (104) nach einem der vorhergehenden Ansprüche, wobei das Trägerelement (142) eine flexible Leiterplatte umfasst.

8. Drahtlose Messsonde (104) nach einem der vorhergehenden Ansprüche, wobei das Fenster (130) ein geformtes Kunststofffenster umfasst.

9. Drahtlose Messsonde (104) nach einem der vorhergehenden Ansprüche, wobei das Fenster (130) Polycarbonat umfasst.

10. Drahtlose Messsonde (104) nach einem der vorhergehenden Ansprüche, umfassend mindestens eine Batterie (190) innerhalb des Sondenkörpers (110) zum Versorgen der drahtlosen Messsonde mit Energie, wobei das Fenster (130) ausreichend gasdurchlässig ist, um zu ermöglichen, dass jegliches von der mindestens einen Batterie (190) emittierte Gas über das Fenster aus dem Inneren des Sondenkörpers (110) entlüftet wird.

11. Drahtlose Messsonde (104) nach einem der vorhergehenden Ansprüche, wobei der zylindrische Sondenkörper (110) einen Außendurchmesser von 30 mm oder weniger aufweist.

12. Drahtlose Messsonde (104) nach einem der vorhergehenden Ansprüche, ferner umfassend einen Berührungsauslösesensor.

13. Drahtlose Messsonde (104) nach einem der Ansprüche 1 bis 11, ferner umfassend einen analogen Auslenkungssensor.

## Revendications

1. Un palpeur de mesure sans fil (104) pour machine-outil, comprenant :
un élément porteur (142) comprenant un émetteur ou un récepteur de rayonnement (140), et
un corps de palpeur (110) qui entoure l'élément porteur (142) et comprend une fenêtre (130) qui est sensiblement transparente au rayonnement émis ou reçu, dans lequel le corps de palpeur (110) est cylindrique et la fenêtre (130) comprend une fenêtre annulaire,
dans lequel l'élément porteur (142) est engagé avec ou fixé à la fenêtre (130) de telle sorte que l'émetteur ou le récepteur de rayonnement (140) est maintenu dans un emplacement sensiblement invariant par rapport à la fenêtre (130).

2. Un palpeur de mesure sans fil (104) selon l'une quelconque des revendications précédentes, dans lequel la fenêtre (130) comprend au moins une saillie ou un évidement pour engager et aligner l'élément porteur (142).

3. Un palpeur de mesure sans fil (104) selon la revendication 2, comprenant au moins une polarisation pour pousser l'élément porteur (142) en prise avec la ou les saillies ou évidements.

4. Un palpeur de mesure sans fil (104) selon la revendication 1, dans lequel l'intérieur de la fenêtre annulaire (130) comprend un bourrelet faisant saillie vers l'intérieur (160) autour de sa circonférence qui permet à l'élément porteur (142) d'être maintenu dans un emplacement prédéterminé par rapport à la fenêtre annulaire (130).

5. Un palpeur de mesure sans fil (104) selon l'une quelconque des revendications précédentes, dans lequel l'émetteur ou le récepteur de rayonnement (140) comprend une antenne RF.

6. Un palpeur de mesure sans fil (104) selon l'une quelconque des revendications précédentes, dans lequel l'émetteur ou le récepteur de rayonnement (140) comprend un émetteur ou un détecteur optique.

7. Un palpeur de mesure sans fil (104) selon l'une quelconque des revendications précédentes, dans lequel l'élément porteur (142) comprend une carte de circuit imprimé flexible.

8. Un palpeur de mesure sans fil (104) selon l'une quelconque des revendications précédentes, dans lequel la fenêtre (130) comprend une fenêtre en plastique moulée.

9. Un palpeur de mesure sans fil (104) selon l'une quelconque des revendications précédentes, dans lequel la fenêtre (130) comprend du polycarbonate.

10. Un palpeur de mesure sans fil (104) selon l'une quelconque des revendications précédentes, comprenant au moins une batterie (190) à l'intérieur du corps de palpeur (110) pour alimenter le palpeur de mesure sans fil, dans lequel la fenêtre (130) est suffisamment perméable aux gaz pour permettre à tout gaz émis par la ou les batteries (190) d'être évacué de l'intérieur du corps de palpeur (110) par la fenêtre.

11. Un palpeur de mesure sans fil (104) selon l'une quelconque des revendications précédentes, dans lequel le corps de palpeur cylindrique (110) comporte un diamètre extérieur de 30 mm ou moins.

12. Un palpeur de mesure sans fil (104) selon l'une quelconque des revendications précédentes, comprenant en outre un capteur à déclenchement par contact.

13. Un palpeur de mesure sans fil (104) selon l'une quelconque des revendications 1 à 11, comprenant en outre un capteur de fléchissement analogique.
